# EUROPÄISCHE PATENTSCHRIFT

(11) **EP 1 449 289 B1**
(45) Veröffentlichungstag und Bekanntmachung des Hinweises auf die Patenterteilung: **20.08.2008**
(21) Anmeldenummer: 02787387.6
(22) Anmeldetag: 25.11.2002
(51) Int. Cl.: H02K 41/02, H02K 41/03

(54) **LUFTGEKÜHLTE SPULENEINHEIT EINES LINEARMOTORS**
AIR-COOLED COIL UNIT OF A LINEAR ENGINE
UNITE BOBINE REFROIDIE PAR AIR DE MOTEUR LINEAIRE

(30) Priorität: 29.11.2001 DE 10158694
(43) Veröffentlichungstag der Anmeldung: 25.08.2004
(73) Patentinhaber: SIEMENS AKTIENGESELLSCHAFT, 80333 München (DE)
(72) Erfinder: ANDERSCH, Walter, 85551 Kirchheim (DE)
(86) Internationale Anmeldenummer: PCT/DE2002/004307
(87) Internationale Veröffentlichungsnummer: WO 2003/049262

(56) Entgegenhaltungen:
- DE-A- 19 604 642
- PATENT ABSTRACTS OF JAPAN vol. 017, no. 193 (E-1351), 15. April 1993 (1993-04-15) -& JP 04 340360 A (FUJI ELECTRIC CO LTD), 26. November 1992 (1992-11-26)
- PATENT ABSTRACTS OF JAPAN vol. 2000, no. 21, 3. August 2001 (2001-08-03) -& JP 2001 103726 A (TOYODA MACH WORKS LTD), 13. April 2001 (2001-04-13)
- PATENT ABSTRACTS OF JAPAN vol. 016, no. 497 (E-1279), 14. Oktober 1992 (1992-10-14) -& JP 04 183258 A (DAIFUKU CO LTD), 30. Juni 1992 (1992-06-30)
- PATENT ABSTRACTS OF JAPAN vol. 013, no. 214 (M-827), 18. Mai 1989 (1989-05-18) -& JP 01 034105 A (TOSHIBA CORP), 3. Februar 1989 (1989-02-03)

## Beschreibung

Die Erfindung bezieht sich auf eine Spuleneinheit eines Linearmotors mit elektromagnetischen Spulen, mit zumindest einem Eisenkern, und mit einem die Spulen und den Eisenkern umgreifenden Gehäuse, das zu einer Magnetbahn des Linearmotors hin offen ist, wobei der Eisenkern mit dem Gehäuse fest verbunden ist, wobei die Spulen mittels einer Vergussmasse fixiert sind und wobei innerhalb des Gehäuses zumindest ein Kühlluftkanal vorgesehen ist.

Eine derartige Spuleneinheit ist zum Beispiel durch die DE 19842384 A1 bekannt geworden. Danach ist ein Motorprimärteil in einem als Laufwagen bezeichneten Gehäuse aufgenommen und über einem Sekundärteil eines schienenartigen Führungsgehäuses verfahrbar. Ein solches Primärteil besteht üblicherweise aus einem Magneteisenkern, der mittels quer liegenden Spulen betätigbar ist. Es ist üblich, derartige Spulen mit dem Kern und dem Gehäuse zu vergießen und zu fixieren. Im Gehäuse sind nach Spalt 3, Zeilen 23 bis 26 Lüftungsschlitze ausgebildet, die die Verlustwärme des Motors abführen und die Erwärmung des Spulenteils so gering wie möglich halten sollen.

Durch die US 4,172,229 A ist ferner ein doppeltwirkender Linearmotor bekannt geworden, bei dem ein Eisenkern zwischen die Seitenschenkel eines U-förmigen Magnetteils eintaucht. Der Eisenkern ist mit Spulen umwickelt, in deren Zwischenräumen zwangsbelüftete Kühlluftkanäle angeordnet sind. Die Kühlluftkanäle vergrößern den Abstand zwischen den Spulen und erhöhen damit die Teilungsbreite zwischen den aktiven Linearmotorabschnitten.

Ferner ist durch die US 5,642,013 A ein Linearmotor bekannt geworden, bei dem die Spulenwindungen in schlitzartige Vertiefungen des Magnetkerns eingesetzt sind. Die Vertiefungen nehmen in ihrem Basisbereich Kühlrohre für eine Kühlflüssigkeit auf, die über eine Druckleitung zugeführt und über eine Rückleitung abgeführt werden muss. Derartige Leitungsverbindungen eignen sich nicht für schnell laufende Spulenteile, wie sie z. B. zur Bestückung von Substraten mit elektrischen Bauelementen eingesetzt werden. Außerdem beeinträchtigen die Kühlkanäle den Magnetfluss.

Der Erfindung liegt die Aufgabe zugrunde, eine Spuleneinheit mit einem einseitig wirkenden Linearmotor zu schaffen, bei dem die thermischen Verhältnisse verbessert werden.

Diese Aufgabe wird durch die Erfindung gemäß Anspruch 1 gelöst. Durch den umlaufend angeordneten Spalt wird eine sehr große Kühlfläche mit maximaler Kühlwirkung geschaffen. Diese Kühlfläche befindet sich außerhalb des magnetischen Wirkungsbereichs der Spulen und des Kerns. Diese können in einem engen Wirkabstand angeordnet werden, so-dass eine große Leistungsdichte erreicht werden kann.

Ein besonderer Vorteil besteht darin, dass der Spalt eine großflächige thermische Trennlage bildet, durch die die Verlustwärme des Spulenteils vom umgebenen Traggehäuse ferngehalten wird. Dadurch erwärmt sich dieses so gering, dass keine nennenswerte Verformung im Gehäuse stattfindet und Verspannungen zwischen seitlichen Linearführungsteilen vermieden werden, die an dem Gehäuse befestigt sind. Es ist üblich, einen Linearmotor als Positionierantrieb für einen Positionierarm zu verwenden, bei dem ein thermischer Verzug im Gehäuse eine Lageveränderung bewirken kann, die die Positioniergenauigkeit verringert.

Die Spaltweite kann z. B. auf ein Maß von 0,2 mm verringert werden, bei dem sich ein intensiver Materialkontakt zwischen dem Kühlmedium und den zu kühlenden Teilen ergibt. Durch die große Spaltlänge wird außerdem das Geräusch der austretenden Kühlluft auf eine große Länge verteilt und entsprechend in seiner Intensität reduziert. Das übliche Vergießen der Spulen und des Eisenkerns mit einem Rahmengehäuse kommt hier nicht in Frage. Die Zuordnung und Kraftübertragung erfolgt hier über die schmalen Stützelemente z. B. mittels Verbindungsschrauben. Das bedeutet, dass der die Kontaktfläche zwischen dem Gehäuse und dem Spulenteil auf singuläre dünne Stützpunkte reduziert wird, so dass die unmittelbare Wärmeleitung nahezu vollständig unterbrochen ist. Um den Spaltquerschnitt umlaufend gleichbleibend zu halten, müssen die beiden Formteile z. B. in entsprechenden Gießformen genau einander angepasst werden.

Vorteilhafte Weiterbildungen der Erfindung sind in den Ansprüchen 2 bis 8 gekennzeichnet:

Durch die Weiterbildung nach Anspruch 2 wird die Kühlluft gleichmäßig verteilt und um die zu kühlenden Teile vollständig herumgeführt, so dass die volle Kühlwirkung erreicht wird. Dabei ist es möglich, dass die Spaltbreite z. B. an den weniger wärmebelasteten Außenkanten des Eisenkerns auf einen größeren Querschnitt erweitert wird.

Durch die Weiterbildung nach Anspruch 3 können zusätzliche Kühlkanäle geschaffen werden, die die Kühlwirkung noch weiter verbessern.

Die Stützhöcker nach Anspruch 4 können als angeformte nockenartige Erhebungen ausgebildet sein, an denen sich der Eisenkern abstützt.

Durch die Abstandsstücke nach den Ansprüchen 5 und 6 wird die Wärmeleitung zwischen dem Eisenkern und dem Gehäuse weiter verringert. Es besteht die Möglichkeit, ein Keramikmaterial zu verwenden, dessen Wärmedämmung z.B. um ein 50-faches größer ist als die von Aluminium, wodurch die Brückenwirkung der Stützelemente weitgehend aufgehoben wird.

Durch die Weiterbildung nach Anspruch 7 kann eine Vielzahl von Stützstellen auf einer ebenen Fläche mit entsprechender Formgenauigkeit geschaffen werden.

Die Weiterbildung nach Anspruch 8 ermöglicht eine formsteife Verbindung zwischen den Führungselementen und dem Gehäuse. Einen thermischen Verzug ausgleichende elastische Strukturen sind hier nicht erforderlich, so dass eine formstabile Verbindung zwischen den Führungselementen und der Montagebasis gebildet wird.

Im folgenden wird die Erfindung anhand eines in der Zeichnung dargestellten Ausführungsbeispiels näher erläutert.
- Figur 1: zeigt einen Schnitt durch eine Spuleneinheit eines Linearmotors quer zu dessen Bewegungsrichtung,
- Figur 2: einen Schnitt durch die Spuleneinheit entlang der Linie II-II in Figur 1,
- Figur 3: einen vergrößerten Teilschnitt durch ein abgewandeltes Stützelement der Spuleneinheit nach Figur 1.

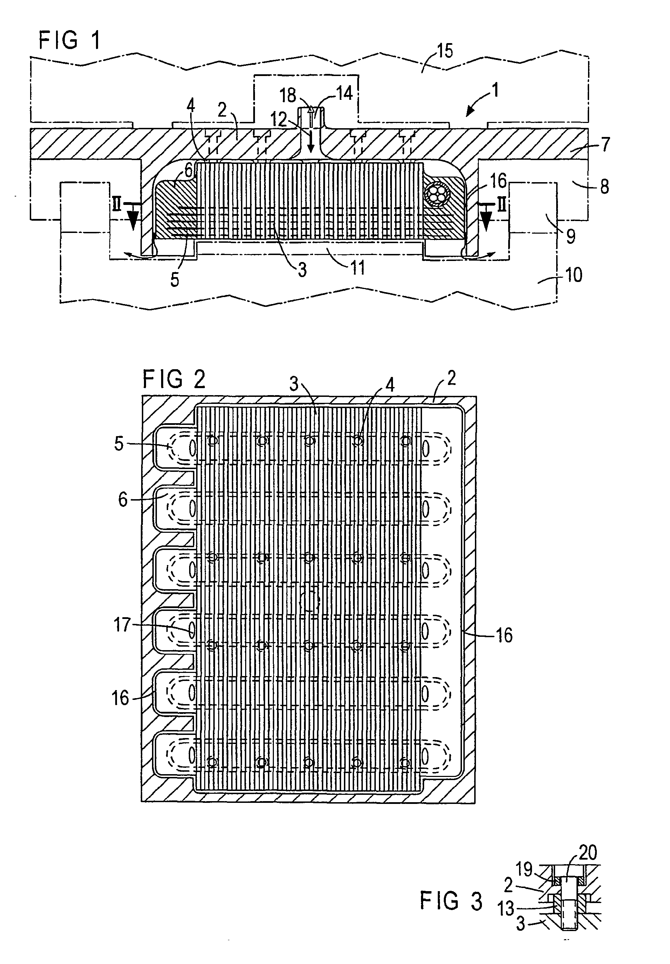

Nach den Figuren 1 und 2 weist eine Spuleneinheit 1 ein Gehäuse 2 auf, an dem ein aus Lamellen gebildeter Eisenkern 3 über Stützelemente 4 befestigt ist, die als einstückig an das Gehäuse 2 angeformte Stützhöcker ausgebildet sind. Der Eisenkern 3 ist mit Wicklungen von elektrischen Spulen 5 durch eine Vergussmasse 6 fest verbunden. Das Gehäuse 2 weist seitlich abstehende flanschartige Vorsprünge 7 auf, die der Befestigung von linearen Führungselementen 8 dienen. Diese wirken mit entsprechenden Führungsschienen 9 einer stationären Führungsbahn 10 zusammen. Diese weist zwischen den Führungsschienen 9 eine Magnetbahn 11 auf, die aus in der Verfahrrichtung aneinandergereihten Permanentmagneten besteht.

Das Gehäuse 2 ist auf der der Magnetbahn 11 zugewandten Seite offen und umschließt an den übrigen Seiten den Eisenkern 3 mit den Spulen 5 in engem Abstand. Dieser stellt sich als umlaufender Spalt 16 dar, dessen Weite auf den Bruchteil eines halben Millimeters verringert ist. Der Eisenkern 3 und die Spulen 5 bilden zusammen mit der Vergussmasse 6 ein Formteil mit definierten Außenkonturen, an die die Innenwand des Gehäuses 2 genau angepasst ist, um eine definierte Spaltweite zu sichern. In der Vergussmasse 6 sind zusätzliche Kühlluftkanäle 17 ausgebildet, die zwischen den seitlichen Endbereichen der Spulen 5 und dem Eisenkern 3 angeordnet sind. Die in Figur 2 auf der linken Seite dargestellte Umlaufkontur ergibt einen Spalt 16, der sich zwischen die Enden der Spulen erstreckt und eine entsprechend große Kühlfläche nahe an der Wärmequelle bildet. Auf der rechten Seite der Figur 2 ist eine andere Variante dargestellt, bei der der Spalt 16 eine geradlinige Hüllkurve beschreibt, wodurch sich die Masse des schwereren Gehäuses und damit die Gesamtmasse verringert.

Das Gehäuse 2 weist auf seiner der Magnetbahn 11 abgewandten Oberseite für gemäß dem Richtungspfeil 12 senkrecht zur Oberseite des Eisenkerns 3 zugeführte Kühlluft einen Einlaßstutzen 14 auf. Dieser erweitert sich trichterförmig zum Eisenkern 3 hin, so daß am Übergang zum Spalt 16 der Strömungsquerschnitt nicht verengt wird. Dadurch kann die durch die Einlassöffnung eingeblasene Kühlluft großflächig auf den sich im Betrieb erwärmenden Formkörper verteilt werden, um diesen mit hoher Effizienz zu kühlen. Je nach Größe des Eisenkerns können auch mehrere Einlaßstutzen mit Abstand zueinander vorgesehen werden. Es ist auch möglich, die Kühlluft mit umgekehrter Strömungsrichtung aus dem Einlaßstutzen abzusaugen und diese erwärmte Luft über einen Abluftschlauch z.B. aus einem Maschinengehäuse heraus zu führen, wie dies durch einen zweiten Richtungspfeil 18 angedeutet ist.

Der Spalt bildet eine thermische Trennlage zwischen den aktiven Teilen und dem Gehäuse 2 mit minimalem Körperkontakt an den punktartigen Stützelementen 4. Dadurch wird das Gehäuse weitgehend thermisch isoliert. Seine der Magnetbahn 11 abgewandte Oberseite kann somit unmittelbar als Montagebasis für weitere Konstruktionsteile von hoher Lagefestigkeit dienen.

Nach Figur 3 sind die Stützelemente als separate ringförmige Abstandsstücke 13 von geringer Wärmeleitfähigkeit aus Keramik oder gesintertem Kunststoff ausgebildet. Um die thermische Isolierung weiter zu verbessern, ist ihre Dicke größer als die Spaltweite, wobei das Gehäuse 2 entsprechende Vertiefungen aufweist. Eine Unterlegscheibe 19 für den Kopf einer metallischen Befestigungsschraube 20 besteht aus einem gleichartigen Material wie das Abstandsstück 13.

## Patentansprüche

1. Spuleneinheit (1) eines einseitig wirkenden Linearmotors mit elektromagnetischen Spulen (5), mit zumindest einem Eisenkern (3) und mit einem die Spulen und den Eisenkern (3) umgreifenden Gehäuse (2), das zu einer Magnetbahn (11) des Linearmotors hin offen ist,
wobei der Eisenkern (3) mit dem Gehäuse (2) fest verbunden ist,
wobei die Spulen (5) mittels einer Vergussmasse (6) fixiert sind und
wobei innerhalb des Gehäuses (2) zumindest ein Kühlluftkanal vorgesehen ist,
**dadurch gekennzeichnet , dass** das Gehäuse (2) und der Eisenkern (3) mit den vergossenen Spulen (5) als einander angepasste Formteile ausgebildet und durch einen umlaufend ausgebildeten Spalt von weniger als 1 mm Weite getrennt sind und
dass der Eisenkern (3) über schmale Stützelemente (4) mit dem Gehäuse (2) verbunden ist.

2. Spuleneinheit nach Anspruch 1,
**dadurch gekennzeichnet, dass** eine Einlassöffnung (14) für die Kühlluft auf der der Magnetbahn (11) abgewandten Oberseite des Eisenkerns (3) angeordnet ist und dass der Spalt (16) bis zu der offenen Unterseite des Gehäuses (2) geführt ist.

3. Spuleneinheit nach Anspruch 1, oder 2,
**dadurch gekennzeichnet, dass** in der Vergussmasse (6), insbesondere zwischen den Wicklungen der Spulen (5) und dem Eisenkern (3) zusätzliche Kühlluftkanäle (17) ausgebildet sind.

4. Spuleneinheit nach einem der Ansprüche 1, 2 oder 3,
**dadurch gekennzeichnet, dass** die Stützelemente (4) als am Gehäuse (2) ausgeformte Stützhöcker ausgebildet sind.

5. Spuleneinheit nach einem der Ansprüche 1, 2 oder 3,
**dadurch gekennzeichnet , dass** die Stützelemente als separate Abstandsstücke (13) von geringer Wärmeleitfähigkeit ausgebildet sind.

6. Spuleneinheit nach Anspruch 5,
**dadurch gekennzeichnet, dass** die Dicke der ringförmigen, aus druckfester Keramik bestehenden Abstandsstücke (13) größer ist als die Spaltweite und dass das Gehäuse (2) Vertiefungen für die Abstandsstücke (13) aufweist.

7. Spuleneinheit nach Anspruch 4, 5 oder 6,
**dadurch gekennzeichnet , dass** die Stützelemente (4) an der Oberseite des Gehäuses (2) angeordnet sind und
dass die Oberseite als Montagebasis für weitere Konstruktionsteile (15) ausgebildet ist.

8. Spuleneinheit nach einem der vorhergehenden Ansprüche,
**dadurch gekennzeichnet , dass** das Gehäuse (2) seitliche Stützvorsprünge (7) für lineare Führungselemente (8)) aufweist.

## Claims

1. Coil unit (1) of a single-acting linear motor with electromagnetic coils (5) having at least one iron core (3) and having a housing (2) which encloses said coils and iron core (3) and which is open toward a magnetic track (11) of the linear motor,
wherein the iron core (3) is permanently linked with the housing (2),
wherein the coils (5) are secured in position by means of a cast compound (6), and
wherein at least one cooling-air channel is provided within the housing (2)
**characterised in that**
the housing (2) and the iron core (3) with the cast-sealed coils (5) are embodied as mutually matched moulded parts and are separated by a circumferentially embodied gap less than 1 mm wide and
**in that** the iron core (3) is linked with the housing (2) via narrow support elements (4).

2. Coil unit according to claim 1
**characterised in that** an intake opening (14) for the cooling air is located on the iron core's (3) top side facing away from the magnetic track (11) and that the gap (16) is routed as far as the open underside of the housing (2).

3. Coil unit according to claim 1 or 2
**characterised in that** additional cooling-air channels (17) are embodied in the cast compound (6), in particular between the windings of the coils (5) and the iron core (3).

4. Coil unit according to claim 1, 2 or 3
**characterised in that** the support elements (4) are embodied as support knuckles shaped on the housing (2).

5. Coil unit according to one of claims 1, 2 or 3
**characterised in that** the support elements are embodied as separate spacers (13) having low thermal conductivity.

6. Coil unit according to claim 5
**characterised in that** the ring-shaped spacers (13) made of compression-proof ceramic are wider in diameter than the gap width and **in that** the housing (2) has recesses for said spacers (13).

7. Coil unit according to claim 4, 5 or 6
**characterised in that** the support elements (4) are located on the top side of the housing (2) and
**in that** the top side is embodied as a mounting base for further structural parts (15).

8. Coil unit according to one of the preceding claims
**characterised in that** the housing (2) has lateral support projections (7) for linear guide elements (8).

## Revendications

1. Unité de bobine (1) d'un moteur linéaire à action unilatérale doté de bobines électromagnétiques (5), comprenant au moins un noyau de fer (3) et comprenant un boîtier (2) entourant les bobines et le noyau de fer (3), ce boîtier étant ouvert en direction d'un chemin magnétique (11) du moteur linéaire,
le noyau de fer (3) étant raccordé au boîtier (2) de manière fixe,
les bobines (5) étant fixées au moyen d'une masse de scellement (6) et
au moins un canal d'air de refroidissement étant ménagé à l'intérieur du boîtier (2),
**caractérisé en ce que** le boîtier (2) et le noyau de fer (3), avec les bobines scellées (5), sont formés en tant que des pièces moulées adaptées les unes aux autres et sont séparés par une fente exécutée de manière continue, de largeur inférieure à 1 mm et
**en ce que** le noyau de fer (3) est raccordé au boîtier (2) par l'intermédiaire d'étroits éléments de support (4).

2. Unité de bobine selon la revendication 1,
**caractérisée en ce qu'**une ouverture d'entrée (14) pour l'air de refroidissement est disposée sur le côté supérieur, détourné du chemin magnétique (11), du noyau de fer (3) et **en ce que** la fente (16) est menée jusqu'au côté inférieur ouvert du boîtier (2).

3. Unité de bobine selon la revendication 1 ou 2,
**caractérisée en ce que** des canaux d'air de refroidissement supplémentaires (17) sont exécutés dans la masse de scellement (6), notamment entre les enroulements des bobines (5) et le noyau de fer (3).

4. Unité de bobine selon l'une quelconques des revendications 1, 2 ou 3,
**caractérisée en ce que** les éléments de support (4) sont exécutés en tant que des bosses de support formées sur le boîtier (2).

5. Unité de bobine selon l'une quelconques des revendications 1, 2 ou 3,
**caractérisée en ce que** les éléments de support sont exécutés en tant que des pièces d'écartement séparées (23) de conductibilité thermique moindre.

6. Unité de bobine selon la revendication 5,
**caractérisée en ce que** l'épaisseur des pièces d'écartement (13) annulaires constituées de céramique résistante à la pression est supérieure à la largeur de la fente et **en ce que** le boîtier (2) présente des approfondissements pour les pièces d'écartement (13).

7. Unité de bobine selon la revendication 4, 5 ou 6,
**caractérisée en ce que** les éléments de support (4) sont disposés sur le côté supérieur du boîtier (2) et
**en ce que** le côté supérieur est exécuté comme base de montage pour d'autres pièces de construction (15).

8. Unité de bobine selon l'une quelconques des revendications précédentes,
**caractérisée en ce que** le boîtier (2) présente des saillies de support (7) latérales pour des éléments de guidage linéaires (8).
